# EUROPÄISCHE PATENTSCHRIFT

(11) **EP 2 948 336 B1**
(45) Veröffentlichungstag und Bekanntmachung des Hinweises auf die Patenterteilung: **31.08.2022**
(21) Anmeldenummer: 14707698.8
(22) Anmeldetag: 20.02.2014
(51) Int. Cl.: B60L 9/16, B60L 15/20, B61C 15/14, B61F 5/38, B61C 3/00, B61C 9/38

(54) **ASYMMETRISCHER ANTRIEB EINES SCHIENENFAHRZEUGS MIT LÄNGSRADSÄTZEN**
ASYMMETRICAL DRIVE OF A RAIL VEHICLE HAVING LONGITUDINAL WHEELSETS
ENTRAÎNEMENT ASYMÉTRIQUE D'UN VÉHICULE FERROVIAIRE POURVU D'ESSIEUX LONGITUDINAUX

(30) Priorität: 12.03.2013 DE 102013204232
(43) Veröffentlichungstag der Anmeldung: 02.12.2015
(73) Patentinhaber: Siemens Mobility GmbH, 81739 München (DE)
(72) Erfinder: RICHTER, Wolfgang-Dieter, 90610 Winkelhaid (DE); KERSCHER, Manfred, 91096 Möhrendorf (DE)
(86) Internationale Anmeldenummer: PCT/EP2014/053328
(87) Internationale Veröffentlichungsnummer: WO 2014/139771

(56) Entgegenhaltungen:
- EP-A1- 0 590 183
- EP-A1- 0 698 540
- EP-A2- 0 511 949
- EP-A2- 2 301 789
- DE-A1- 19 826 452

## Beschreibung

Die Erfindung betrifft ein Schienenfahrzeug mit zumindest zwei Umrichtern zur Energieversorgung von Fahrmotoren zum Antrieb von Rädern des Schienenfahrzeugs.

Die EP 0698 540 A1 offenbart ein Schienenfahrzeug mit Längsradsätzen, wobei die Losräder einer Fahrzeugseite mechanisch gekoppelt sind und somit gemeinsam angetrieben werden. Aus der EP 0 590 183 A1 ist ein Verfahren und eine Vorrichtung zur Verbesserung der Laufeigenschaft eines Radblock-Drehgestells bekannt. Die EP 2 301 789 A2 beschreibt ein Schienenfahrzeug mit Einzelradantrieben, wobei jedes angetriebene Rad des Antriebsgestells mittels einer elektrischen Maschine antreibbar ist und in der DE 198 26 452 A1 wird ein Verfahren zur Antriebskoordinierung von einzelradgetriebenen, spurgeführten Fahrzeugen offenbart. Die EP 0 511 949 A2 offenbart ein Verfahren zu Steuerung eines Fahrwerks ohne starre Achsverbindungen, bei welchem zumindest zwei einander gegenüberliegende Räder einzeln von separat ansteuerbaren Antriebseinheiten angetrieben werden und bei dem während der Kurvenfahrt die Antriebseinheiten einander gegenüberliegender Räder mit unterschiedlicher Leistung betrieben werden.

Aus dem Schienenverkehr sind verschiedene Antriebskonzepte für Schienenfahrzeuge bekannt. Konventionell weist ein Schienenfahrzeug mehrere Fahrwerke oder Drehgestelle auf. Bei einem Drehgestell mit konventionellen Radsätzen sind die sich gegenüberliegenden Räder durch Achsen starr miteinander verbunden. Dadurch sind die Räder mechanisch quergekoppelt. Solche Schienenfahrzeuge können Bögen nur bis zu einem vorgegebenen minimalen Radius ohne Reibungsverluste durchfahren, welche durch Rollradienunterschiede bedingt sind. Bei üblichen konischen Radreifenprofilen beträgt dieser minimale Radius ungefähr 120 m.

Daneben sind Drehgestelle mit Losradsätzen im Einsatz. Die Räder an Achsstummeln sind einzeln gelagert und ohne mechanische Querkopplung. Dadurch ist zwar das Problem der genannten Reibungsverluste gelöst, jedoch treten Reibungsverluste aus Schräglauf aufgrund fehlender Selbstzentrierung selbst auf gerader Strecke auf.

Werden die Losräder einer Fahrzeugseite nun gemeinsam durch eine mechanische Längskopplung angetrieben, wird von einem Längsradsatz gesprochen. Üblicherweise werden die Längsradsätze von Fahrmotoren angetrieben, welche dann über einen für jedes Drehgestell gemeinsamen Umrichter mit Energie versorgt werden. Es handelt sich dabei um eine elektrische Querkopplung der Längsradsätze. Als Beispiel für einen solchen Antrieb sei das Fahrzeug "Combino Plus" der Siemens AG angeführt, welches zum Zeitpunkt dieser Patentanmeldung in Budapest eingesetzt wird.

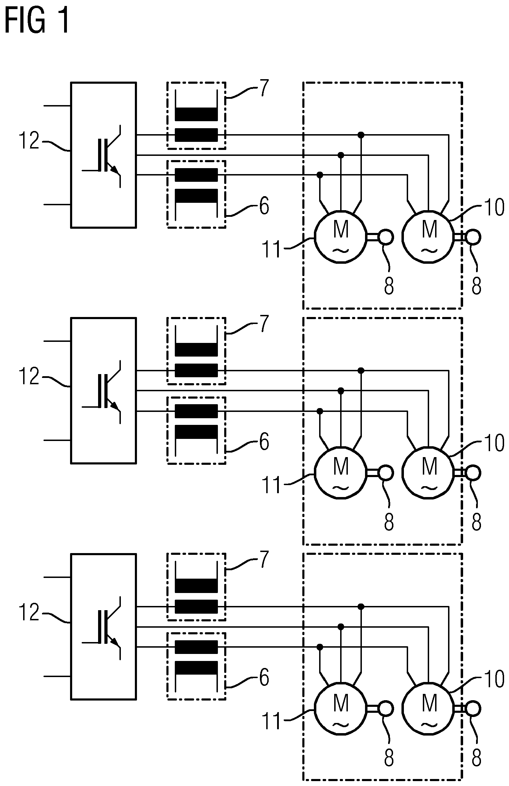

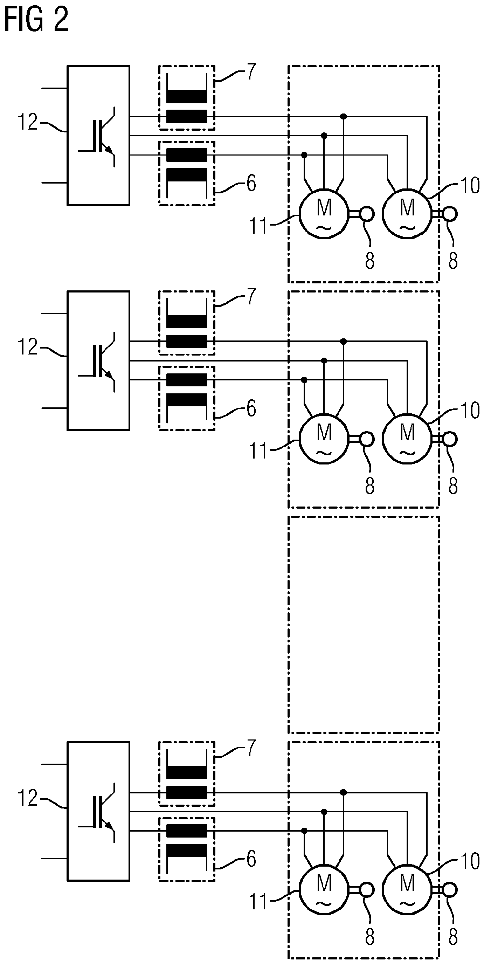

Fig. 1 zeigt schematisch ein dreiteiliges Schienenfahrzeug mit drei angetriebenen Drehgestellen mit Längsradsätzen. Jeder Längsradsatz wird durch jeweils einen Fahrmotor 10, 11 angetrieben. Somit weist jedes Drehgestell zwei Fahrmotoren 10 und 11 auf. Die zwei Fahrmotoren 10 und 11 jedes angetriebenen Drehgestells werden über einen gemeinsamen Umrichter 12 mit Energie versorgt. Die Längsradsätze jedes Drehgestells sind somit elektrisch quergekoppelt. Fig. 2 veranschaulicht hingegen ein vierteiliges Schienenfahrzeug, wobei es drei angetriebene Drehgestelle mit Längsradsätzen umfasst und ein Laufdrehgestell. Beide skizzierten Schienenfahrzeuge weisen somit drei Umrichter 12 auf.

Der Erfindung liegt die Aufgabe zugrunde, den Verschleiß und den Energieverbrauch eines Schienenfahrzeugs zu reduzieren.

Gelöst wird die Aufgabe durch die Gegenstände der unabhängigen Patentansprüche 1 und 5. Weiterbildungen und Ausgestaltungen der Erfindung finden sich in den Merkmalen der abhängigen Patentansprüche wieder.

Ein erfindungsgemäßes Schienenfahrzeug, insbesondere ein Schienenfahrzeug des Personenverkehrs, umfasst zumindest zwei angetriebene Längsradsätze auf jeder Fahrzeugseite und zum Antrieb der Räder der Längsradsätze einen ersten Umrichter und zumindest einen weiteren, zweiten Umrichter. Über den ersten Umrichter werden dabei ausschließlich Räder einer ersten Fahrzeugseite angetrieben und über den zweiten Umrichter werden ausschließlich Räder einer zweiten Fahrzeugseite angetrieben. Das Schienenfahrzeug ist dabei so ausgestaltet, dass mit beiden Umrichtern zumindest jeweils zwei Längsradsätze angetrieben werden. Jeweils zumindest zwei Längsradsätze einer Fahrzeugseite sind somit über einen gemeinsamen Umrichter angetrieben.

Durch die bedarfsfähig auch asymmetrische Aufteilung des Antriebs werden die aus Drehzahldifferenzen resultierenden Verluste minimiert und das Bogeneinstellverhalten des Schienenfahrzeugs optimiert.

Bei dem Schienenfahrzeug handelt es sich insbesondere um ein mehrteiliges Schienenfahrzeug, insbesondere des Personennahverkehrs.

Zum Antrieb der Räder umfasst das Fahrzeug zumindest vier, insbesondere jedoch mehrere Fahrmotoren. Jeder Fahrmotor treibt einen oder mehrere Längsradsätze an, jedoch ausschließlich Räder von Längsradsätzen einer vorgegebenen Fahrzeugseite. Die Fahrmotoren werden über die Umrichter mit Energie versorgt. Dabei sind die Umrichter mit den Fahrmotoren so verbunden, dass je ein Umrichter zwei oder mehrere Fahrmotoren zum Antrieb von zumindest zwei Längsradsätzen einer Fahrzeugseite mit Energie versorgt. Gilt beispielsweise als erste Fahrzeugseite, die in Fahrtrichtung rechte Seite des Schienenfahrzeugs, dann wird die in Fahrtrichtung linke Seite des Schienenfahrzeugs als zweite Fahrzeugseite bezeichnet.

Gemäß einer Weiterbildung der Erfindung weist das Schienenfahrzeug auf jeder Fahrzeugseite zumindest drei angetriebene Längsradsätze auf, welche jeweils von einem gemeinsamen Umrichter mit Energie versorgt werden. Der erste Umrichter ist vorgesehen zum Antrieb von zumindest drei ersten Längsradsätzen auf der ersten Fahrzeugseite und der zumindest eine weitere, zweite Umrichter ist vorgesehen zum Antrieb von zumindest drei weiteren, zweiten Längsradsätzen auf der zweiten Fahrzeugseite.

Eine weitere Weiterbildung sieht den ersten und den zweiten Umrichter zum Antrieb von jeweils drei oder mehr Längsradsätzen auf jeder Fahrzeugseite vor.

Die Längsradsätze, also insbesondere jeweils zwei Räder, werden gemäß einer Ausgestaltung der Erfindung von jeweils einem Fahrmotor angetrieben. Somit verfügt das Schienenfahrzeug bei drei Längsradsätzen auf jeder Fahrzeugseite über drei Fahrmotoren auf jeder Fahrzeugseite, welche insbesondere sechs Räder auf jeder Fahrzeugseite antreiben. Die drei Fahrmotoren zum Antrieb der Räder auf einer Fahrzeugseite werden von einem Umrichter mit Energie gespeist. Somit lässt sich bei drei Längsradsätzen auf jeder Fahrzeugseite ein Umrichter einsparen. Unter der Annahme, dass im Stand der Technik immer eine gerade Anzahl von Fahrmotoren, insbesondere zwei oder vier, über einen gemeinsamen Umrichter mit Energie versorgt werden, verringert die Möglichkeit, auch eine ungerade Anzahl von Fahrmotoren, insbesondere drei oder fünf, über einen gemeinsamen Umrichter mit Energie zu versorgen, Aufwand, Kosten und Gewicht für die elektrische Ausrüstung des Schienenfahrzeugs. Einen wirtschaftlichen Vorteil bietet somit auch ein Schienenfahrzeug mit einer ungeraden Anzahl von mindestens drei angetriebenen Fahrwerken oder Triebdrehgestellen und somit mindestens sechs Längsradsätzen, so dass auf der ersten Fahrzeugseite zumindest drei Fahrmotoren von dem gemeinsamen ersten Umrichter mit Energie versorgt werden und so, dass auf der zweiten Fahrzeugseite zumindest drei Fahrmotoren von dem gemeinsamen zweiten Umrichter mit Energie versorgt werden. Ein solches Schienenfahrzeug könnte selbst im Falle des Ausfalls des ersten oder des zweiten Umrichters einseitig angetrieben werden.

Die Räder des Schienenfahrzeugs sind mittels sogenannten Fahrwerken, insbesondere Drehgestellen, insbesondere selbstzentrierenden Drehgestellen, mit einem Wagenkasten des Schienenfahrzeugs verbunden. Ein Drehgestell weist beispielsweise vier angetriebene Räder in zwei Längsradsätzen mit jeweils einem Fahrmotor auf. Die Längsradsätze liegen sich dabei gegenüber.

Das Schienenfahrzeug weist zumindest vier angetriebene, sich paarweise gegenüberliegende Räder auf. Diese sind frei von Querkopplungen, sowohl von elektrischen Querkopplungen als auch von mechanischen Querkopplungen. Eine mechanische Querkopplung zwischen zwei sich gegenüberliegenden Rädern liegt beispielsweise vor, wenn die sich gegenüberliegenden Räder über eine gemeinsame Achse mechanisch starr miteinander verbunden sind. Eine elektrische Querkopplung hingegen liegt beispielsweise vor, wenn die sich gegenüberliegenden Räder über jeweils einen eigenen Fahrmotor angetrieben, diese beiden Fahrmotoren jedoch über einen gemeinsamen Umrichter mit Energie versorgt werden.

Zur Energieversorgung der Fahrmotoren sind die Fahrmotoren mit den Umrichtern elektrisch gekoppelt, insbesondere galvanisch miteinander verbunden.

Weiterhin wird die der Erfindung zugrundeliegende Aufgabe gelöst durch ein Verfahren zum Betreiben eines Schienenfahrzeugs, welches die folgenden Verfahrensschritte umfasst:
- Antreiben von zumindest zwei Längsradsätzen einer ersten Fahrzeugseite mittels Fahrmotoren, welche von einem gemeinsamen, ersten Umrichter mit Energie versorgt werden, und
- Antreiben von zumindest zwei Längsradsätzen einer der ersten Fahrzeugseite gegenüberliegenden, zweiten Fahrzeugseite mittels Fahrmotoren, welche von einem gemeinsamen, zweiten Umrichter mit Energie versorgt werden.

Auch hier handelt es sich bei den Umrichtern insbesondere um Pulswechselrichter. Über jeden Umrichter werden dabei ausschließlich Fahrmotoren mit Energie zum Antrieb von Rädern ausschließlich einer Fahrzeugseite versorgt.

Bei dem erfindungsgemäß betriebenen Schienenfahrzeug handelt es sich weitergebildet um ein erfindungsgemäßes Schienenfahrzeug, insbesondere des Personenverkehrs, beispielsweise des Personennahverkehrs, mit zumindest zwei Längsradsätzen auf jeder Fahrzeugseite, wobei die zumindest zwei Längsradsätze jeder Fahrzeugseite mittels eines gemeinsamen Umrichters frei von elektrischen oder mechanischen Querkopplungen angetrieben werden.

Gemäß einer weiteren Weiterbildung wird das Schienenfahrzeug trassierungsabhängig asymmetrisch betrieben. Dazu werden die zumindest zwei Längsradsätze der in einem Bogen inneren Fahrzeugseite, beispielsweise der ersten Fahrzeugseite, mit einer geringeren Antriebsleistung angetrieben als die zumindest zwei Längsradsätze der in dem Bogen äußeren Fahrzeugseite, hier dann der zweiten Fahrzeugseite. Dem liegt auch der Sachverhalt zugrunde, dass zum Anfahren ein mit dem Radius abnehmender Energiebedarf besteht. Zur Erfassung einer Bogenfahrt umfasst das Schienenfahrzeug Mittel zur Erfassung einer Bogenfahrt des Schienenfahrzeugs. Dazu sind insbesondere Mittel zur Erfassung einer Drehzahldifferenz von zumindest zwei sich gegenüberliegenden Rädern des Schienenfahrzeugs geeignet.

Weitergebildet werden die zumindest zwei Längsradsätze der ersten Fahrzeugseite und die zumindest zwei Längsradsätze der zweiten Fahrzeugseite in Abhängigkeit ihrer Positionen im Bogen und damit in Abhängigkeit einer jeweils vorgegebenen Drehzahl angetrieben. Die Drehzahldifferenz zwischen zumindest einem ersten Rad der ersten Fahrzeugseite und zumindest einem dem ersten Rad gegenüberliegenden zweiten Rad der zweiten Fahrzeugseite wird zunächst erfasst, insbesondere über einen vorgegebenen Zeitraum, um anschließend in Abhängigkeit der Drehzahldifferenz und/oder in Abhängigkeit des zeitlichen Verlaufs der Drehzahldifferenz die zumindest zwei Längsradsätze der ersten Fahrzeugseite und die zumindest zwei Längsradsätze der zweiten Fahrzeugseite anzutreiben. Zum Antrieb des Schienenfahrzeugs in Abhängigkeit seiner Positionen im Bogen respektive in Abhängigkeit der Drehzahldifferenz und/oder in Abhängigkeit des zeitlichen Verlaufs der Drehzahldifferenz umfasst das Schienenfahrzeug eine entsprechend ausgestaltete Steuereinheit. Diese steuert den ersten und den zweiten Umrichter unabhängig voneinander so, dass die Fahrmotoren der ersten Fahrzeugseite und die Fahrmotoren der zweiten Fahrzeugseite unterschiedlich mit Energie versorgt werden können.

So wird weiterbildungsgemäß der Beginn eines Bogens über eine Drehzahldifferenz eines Radpaars, insbesondere des in Fahrtrichtung des Schienenfahrzeugs führenden Radpaars, erfasst. In der Folge kann die Bemessung der Leistungen zum Antreiben der Räder beider Fahrzeugseiten in Abhängigkeit der Drehzahldifferenz und/oder des zeitlichen Verlaufs der Drehzahldifferenz erfolgen, indem eine an den Gradienten des Drehzahlrückgangs gekoppelte Rücknahme der Leistung erfolgt, die den bogeninneren Antrieb versorgt. Die Rücknahme der Leistung erfolgt dabei beispielsweise in Form einer Drehzahl- und/oder Momentenreduktion. Zweckmäßigerweise wird hierbei die Drehzahlvorgabe an die vom Radius bestimmte Abrolldifferenz herangeführt, so dass nach einer Übergangsphase, in welcher für die zumindest drei Fahrwerke oder Drehgestelle unterschiedliche Randbedingungen existieren, mit Einfahrt in den Bogen keine Differenzen zwischen der vorgegebenen Drehzahl und einer erforderlichen optimalen Drehzahl, welche aus einer Differenz der Abrollwege resultiert, mehr bestehen. Wird die Leistungsrücknahme überproportional reduziert oder wird diese Leistung des bogeninneren Antriebs über eine vollständige Rücknahme des Moments Null, ist eine das Selbsteinstellverhalten des Schienenfahrzeugs und seiner Fahrwerke oder Drehgestelle im Bogen unterstützende Wirkung zu erwarten. Ein Radpaar wird dabei gebildet durch zwei sich gegenüberliegende Räder eines Fahrwerks. Die Drehzahldifferenz wird beispielsweise dadurch ermittelt, dass zumindest die Drehzahlen beider Räder des Radpaars gemessen und anschließend voneinander subtrahiert werden. Die Drehzahldifferenz kann auch über einen vorgegebenen Zeitraum aufgezeichnet und ausgewertet werden, um beispielsweise einen zeitlichen Verlauf der Drehzahldifferenz zu erhalten.

Verlässt das Schienenfahrzeug den Bogen wird die Leistung wiederum gleichermaßen erhöht, so dass erst mit dem Verlassen des Bogens wieder die volle Antriebsleistung zur Verfügung steht. Dies ist beispielsweise zur Einhaltung verschiedener Sicherheitsvorschriften gegen zu frühes Beschleunigen aus einem Bogen nutzbar. Bisher wurden hierzu Winkelsensoren in Gelenken eingesetzt, welche jedoch nur eine einstufige Beeinflussung der Fahrzeugsteuerung mit festem Grenzwert erlaubten. Die Winkelsensoren können durch die beschriebenen Maßnahmen ersetzt oder als Referenzelemente weiter eingesetzt werden.

Idealerweise würde jedes angetriebene Rad der ersten Fahrzeugseite und jedes angetriebene Rad der zweiten Fahrzeugseite in Abhängigkeit ihrer jeweiligen Positionen im Bogen und/oder zum Bogen angetrieben werden, also gegebenenfalls mit voneinander unterschiedlichen Drehzahlen. Da hier zumindest zwei Längsradsätze auf jeder Fahrzeugseite mittels eines gemeinsamen Umrichters angetrieben werden, werden hier die zumindest zwei Längsradsätze der ersten Fahrzeugseite zusammen und mit gleicher Leistung angetrieben und die zumindest zwei Längsradsätze der zweiten Fahrzeugseite werden ebenfalls zusammen und mit gleicher Leistung angetrieben.

Ein Antrieb von zumindest zwei Längsradsätzen einer Fahrzeugseite mit einer unterschiedlichen Leistung im Vergleich zur anderen Fahrzeugseite erfolgt dabei insbesondere erst, wenn die zwischen zumindest dem ersten Rad der ersten Fahrzeugseite und zumindest dem zweiten Rad der zweiten Fahrzeugseite erfasste Drehzahldifferenz größer ist als die Differenz zwischen dem Laufkreisdurchmesser und dem Spurkranzkuppendurchmesser der Räder des Schienenfahrzeugs. Damit wird verhindert, dass die Räder beim Befahren von Flachrillenbereichen mit unterschiedlichen Leistungen angetrieben werden.

Zum Erreichen einer vorgegebenen Drehzahl im bogenäußeren Antrieb kann bei einer Anfahrt des Schienenfahrzeugs in einem engen Bogen auf einer Steigung auch der heruntergeregelte bogeninnere Antrieb einbezogen werden. Im Falle einer Notbremsung kann die bogenabhängige Steuerung außer Kraft gesetzt und die volle Bremsleistung zur Verfügung gestellt werden. Auch beim Ansprechen des Gleit- oder Schleuderschutzes kann die bogenabhängige Steuerung abgeschaltet werden. Bei Ausfall eines oder mehrerer Umrichter zum Antrieb der Räder einer Fahrzeugseite können auch die einem intakten Umrichter nächstgelegenen Antriebe, welche über einen der ausgefallenen Umrichter mit Energie versorgt werden, über eine Hilfsschaltung symmetrisch zusammengefasst werden. Eine mechanische Bremse ist so auszulegen, dass sie den Ausfall des elektrischen Anteils kompensieren kann.

Dazu umfasst das Schienenfahrzeug Mittel zur Erfassung der Drehzahlen und/oder einer Drehzahldifferenz von zumindest zwei sich gegenüberliegenden Rädern des Schienenfahrzeugs, seien diese angetrieben oder nicht. Gemäß einer Ausführungsform sind die Mittel geeignet zur Erfassung der Drehzahlen des führenden Radpaars. Soll ein zeitlicher Verlauf zumindest einer Drehzahl und/oder der Drehzahldifferenz errechnet werden, umfasst das Schienenfahrzeug entsprechende Mittel zur Speicherung und Auswertung.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.

Wie bereits näher ausgeführt zeigen die Figuren 1 und 2 Ausführungsbeispiele aus dem Stand der Technik.

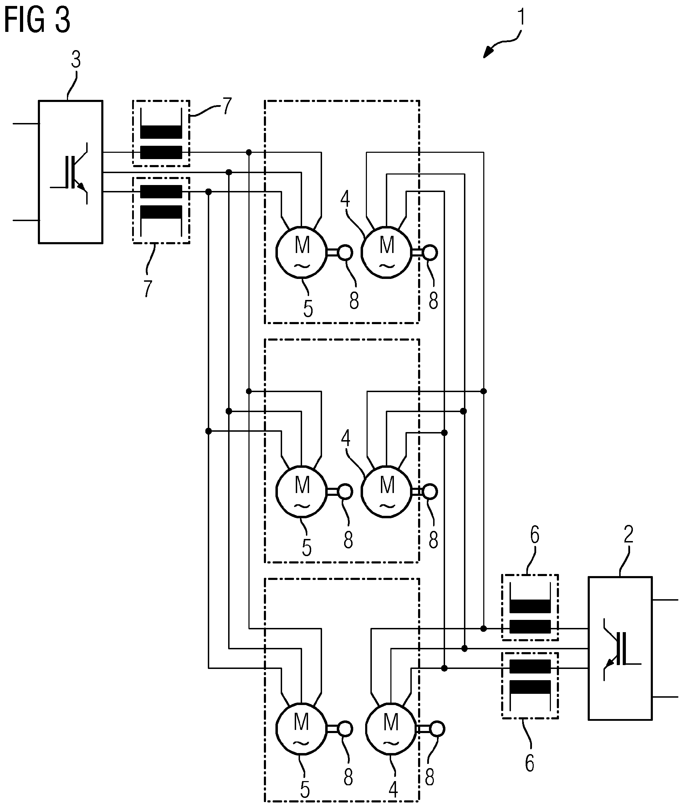

In Fig. 3 ist ein erfindungsgemäßes Schienenfahrzeug 1 in einer ersten, dreiteiligen Ausführungsform schematisch dargestellt. Es umfasst hier einen Pulswechselrichter 2, 3 zum Antrieb bzw. zur Energieversorgung der Fahrmotoren 4, 5 zum Antrieb von jeweils sechs Rädern jeder Fahrzeugseite.

Die Fahrmotoren 4, 5 jeweils einer Wagenseite, also einer in Fahrtrichtung rechten und linken Seite des Schienenfahrzeugs, sind hier über Motorstromwandler 6, 7 elektrisch gekoppelt mit dem gemeinsamen Pulswechselrichter 2, 3. Die Motorstromwandler 6 und 7 sind für den Betrieb der Pulswechselrichter 2 und 3 erforderlich, stehen jedoch in keinem Zusammenhang mit der Erfindung.

Die sich gegenüberliegenden, von unterschiedlichen Pulswechselrichtern 2, 3 angetriebenen Räder verschiedener Fahrzeugseiten sind frei von mechanischen Querkopplungen. Darüber hinaus sind auch die Fahrmotoren 4, 5 frei von elektrischen Querkopplungen, wodurch die Räder frei von elektrischen Querkopplungen von den Fahrmotoren 4, 5 angetrieben werden. Die Räder sind der Übersichtlichkeit wegen nicht gezeichnet. Jeder Teil des dreiteiligen Schienenfahrzeugs 1 umfasst ein Drehgestell, in welchen jeweils zwei Fahrmotoren 2, 3 angeordnet sind. Es umfasst somit drei angetriebene Drehgestelle.

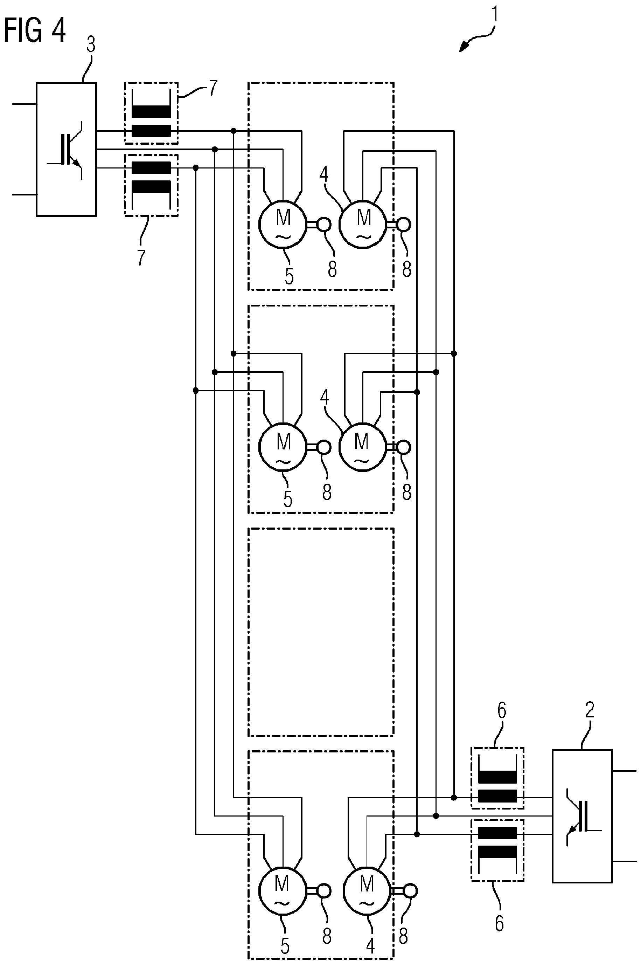

Fig. 4 veranschaulicht ein erfindungsgemäßes Schienenfahrzeug in einer zweiten Ausgestaltung. Hier ist das Schienenfahrzeug 1 vierteilig mit einem Laufdrehgestell ausgeführt. Die angetriebenen Drehgestelle weisen Längsradsätze auf. Auch hier sind lediglich zwei Pulswechselrichter 2, 3 zum Antrieb der Räder des Schienenfahrzeugs vorgesehen, wobei ein erster Pulswechselrichter 2 vorgesehen ist zur Energieversorgung von drei Fahrmotoren 4 zum Antrieb von Rädern einer ersten Fahrzeugseite und wobei ein weiterer, zweiter Pulswechselrichter 3 vorgesehen ist zur Energieversorgung von drei Fahrmotoren 5 zum Antrieb von Rädern einer der ersten Fahrzeugseite gegenüberliegenden, zweiten Fahrzeugseite. Bei einer Bogenfahrt kann der Antrieb der Räder in Abhängigkeit ihrer Position im oder zum Bogen erfolgen. So werden die Räder der bogeninneren Fahrzeugseite mit einer geringeren Leistung angetrieben werden als die Räder der bogenäußeren Fahrzeugseite. Hierzu weisen die Räder Drehzahlgeber 8 auf. Zusätzlich oder alternativ verfügen die Fahrmotoren über die Drehzahlgeber.

## Patentansprüche

1. Schienenfahrzeug mit einer Steuereinheit und zumindest zwei Umrichtern (2, 3) zum Antrieb des Schienenfahrzeugs, wobei ein erster Umrichter (2) vorgesehen ist zur Energieversorgung von zumindest zwei Fahrmotoren zum Antrieb von zumindest zwei Längsradsätzen einer ersten Fahrzeugseite und, wobei ein weiterer, zweiter Umrichter (3) vorgesehen ist zur Energieversorgung von zumindest zwei Fahrmotoren zum Antrieb von zumindest zwei Längsradsätzen einer zweiten Fahrzeugseite,und das Schienenfahrzeug Mittel zur Erfassung einer Drehzahldifferenz von zumindest zwei sich gegenüberliegenden Rädern des Schienenfahrzeugs umfasst, mit welchen eine Drehzahldifferenz zwischen zumindest einem ersten Rad der ersten Fahrzeugseite und zumindest einem dem ersten Rad gegenüberliegenden zweiten Rad der zweiten Fahrzeugseite über einen vorgegebenen Zeitraum erfasst werden,
wobei mittels der Steuereinheit in Abhängigkeit des zeitlichen Verlaufs der Drehzahldifferenz die mindestens zwei Längsradsätze der ersten Fahrzeugseite und mindestens zwei Längsradsätze der zweiten Fahrzeugseite angetrieben werden, wobei in Abhängigkeit der jeweiligen Positionen der mindestens zwei Längsradsätze jeder Fahrzeugseite in einem Bogen und/oder zu einem Bogen der Antrieb von den mindestens zwei Längsradsätzen einer Fahrzeugseite mit einer unterschiedlichen Leistung im Vergleich zur anderen Fahrzeugseite erfolgt, und wobei der Antrieb mit unterschiedlicher Leistung erst erfolgt, wenn die zwischen zumindest dem ersten Rad der ersten Fahrzeugseite und zumindest dem zweiten Rad der zweiten Fahrzeugseite erfasste Drehzahldifferenz größer ist als die Differenz zwischen dem Laufkreisdurchmesser und dem Spurkranzkuppendurchmesser der Räder des Schienenfahrzeugs.

2. Schienenfahrzeug nach Anspruch 1,
wobei sich gegenüberliegende, mittels unterschiedlichen Umrichtern (2, 3) angetriebene Räder der Längsradsätze verschiedener Fahrzeugseiten frei von Querkopplungen untereinander sind.

3. Schienenfahrzeug nach einem der Ansprüche 1 oder 2,
wobei es Mittel zur Erfassung einer Bogenfahrt des Schienenfahrzeugs umfasst und es eine Steuereinheit zur Steuerung des ersten und zweiten Umrichters zur voneinander verschiedenen Energieversorgung der Fahrmotoren beider Fahrzeugseiten umfasst.

4. Schienenfahrzeug nach einem der Ansprüche 1 bis 3,
wobei der erste Umrichter (2) vorgesehen ist zur Energieversorgung von zumindest drei Fahrmotoren zum Antrieb von zumindest drei Längsradsätzen der ersten Fahrzeugseite und der weitere, zweiter Umrichter (3) vorgesehen ist zur Energieversorgung von zumindest drei Fahrmotoren zum Antrieb von zumindest drei Längsradsätzen der zweiten Fahrzeugseite.

5. Verfahren zum Betreiben eines Schienenfahrzeugs nach einem der Ansprüche 1 bis 4, wobei zumindest zwei Fahrmotoren zum Antrieb von mindestens zwei Längsradsätzen einer ersten Fahrzeugseite mittels eines ersten Umrichters mit Energie versorgt werden, und wobei zumindest zwei Fahrmotoren zum Antrieb von mindestens zwei Längsradsätzen einer zweiten Fahrzeugseite mittels eines weiteren, zweiten Umrichters mit Energie versorgt werden, und eine Drehzahldifferenz zwischen zumindest einem ersten Rad der ersten Fahrzeugseite und zumindest einem dem ersten Rad gegenüberliegenden zweiten Rad der zweiten Fahrzeugseite über einen vorgegebenen Zeitraum erfasst wird,
wobei in Abhängigkeit des zeitlichen Verlaufs der Drehzahldifferenz die mindestens zwei Längsradsätze der ersten Fahrzeugseite und mindestens zwei Längsradsätze der zweiten Fahrzeugseite angetrieben werden, wobei in Abhängigkeit der jeweiligen Positionen der mindestens zwei Längsradsätze jeder Fahrzeugseite in einem Bogen und/oder zu einem Bogen die mindestens zwei Längsradsätze einer Fahrzeugseite mit einer unterschiedlichen Leistung im Vergleich zur anderen Fahrzeugseite angetrieben werden, wobei der Antrieb mit unterschiedlicher Leistung erst erfolgt, wenn die zwischen zumindest dem ersten Rad der ersten Fahrzeugseite und zumindest dem zweiten Rad der zweiten Fahrzeugseite erfasste Drehzahldifferenz größer ist als die Differenz zwischen dem Laufkreisdurchmesser und dem Spurkranzkuppendurchmesser der Räder des Schienenfahrzeugs.

6. Verfahren nach Anspruch 5,
wobei die mindestens zwei Längsradsätze der ersten Fahrzeugseite des Schienenfahrzeugs mit einer geringeren Leistung angetrieben werden als die mindestens zwei Längsradsätze der zweiten Fahrzeugseite.

7. Verfahren nach Anspruch 5,
wobei die mindestens zwei Längsradsätze der bogeninneren Fahrzeugseite während einer Bogenfahrt nicht angetrieben werden.

## Claims

1. Rail vehicle having a control unit and at least two converters (2, 3) for driving the rail vehicle, wherein a first converter (2) is provided in order to supply energy to at least two traction motors for driving at least two longitudinal wheelsets of a first vehicle side and, wherein a further, second converter (3) is provided in order to supply energy to at least two traction motors for driving at least two longitudinal wheelsets of a second vehicle side and the rail vehicle comprises means for detecting a rotational speed difference between at least two opposing wheels of the rail vehicle, with which a rotational speed difference between at least one first wheel of the first vehicle side and at least one second wheel, opposing the first wheel, of the second vehicle side are detected over a predetermined period of time, wherein
the control unit is used to drive the at least two longitudinal wheelsets of the first vehicle side and at least two longitudinal wheelsets of the second vehicle side as a function of the temporal course of the rotational speed difference, wherein as a function of the respective positions of the at least two longitudinal wheelsets of each vehicle side in a bend and/or at a bend, the drive of the at least two longitudinal wheelsets of a vehicle side is carried out with a different power compared with the other vehicle side, and wherein the drive is not carried out with a different power until the rotational speed difference detected between at least the first wheel of the first vehicle side and at least the second wheel of the second vehicle side is greater than the difference between the running tread diameter and the wheel flange cap diameter of the wheels of the rail vehicle.

2. Rail vehicle according to claim 1,
wherein opposing wheels of the longitudinal wheelsets of different vehicle sides which are driven by means of different converters (2, 3) are free of transverse couplings with one another.

3. Rail vehicle according to one of claims 1 or 2, wherein it comprises means for detecting a passage of a bend of the rail vehicle and it comprises a control unit for controlling the first and second converter in order to supply energy to the traction motors of both vehicle sides in a different manner from one another.

4. Rail vehicle according to one of claims 1 to 3, wherein the first converter (2) is provided in order to supply energy to at least three traction motors for driving at least three longitudinal wheelsets of the first vehicle side and the further, second converter (3) is provided in order to supply energy to at least three traction motors for driving at least three longitudinal wheelsets of the second vehicle side.

5. Method for operating a rail vehicle according to one of claims 1 to 4, wherein at least two traction motors for driving at last two longitudinal wheelsets of a first vehicle side are supplied with energy by means of a first converter, and wherein at least two traction motors for driving at least two longitudinal wheelsets of a second vehicle side are supplied with energy by means of a further, second converter, and a rotational speed difference between at least one first wheel of the first vehicle side and at least one second wheel of the second vehicle side opposing the first wheel over a predetermined period of time, is detected, wherein
the at least two longitudinal wheelsets of the first vehicle side and at least two longitudinal wheelsets of the second vehicle side are driven as a function of the temporal course of the rotational speed difference, wherein as a function of the respective positions of the at least two longitudinal wheelsets of each vehicle side in a bend and/or at a bend, the at least two longitudinal wheelsets of a vehicle side are driven with a different power compared with the other vehicle side, wherein the drive is not carried out with a different power until the rotational speed difference detected between at least the first wheel of the first vehicle side and at least the second wheel of the second vehicle side is greater than the difference between the running tread diameter and the wheel flange cap diameter of the wheels of the rail vehicle.

6. Method according to claim 5,
wherein the at least two longitudinal wheelsets of the first vehicle side of the rail vehicle are driven with a lower power than the at least two longitudinal wheelsets of the second vehicle side.

7. Method according to claim 5,
wherein the at least two longitudinal wheelsets of the vehicle side inside the bend are not driven during a passage of a bend.

## Revendications

1. Véhicule ferroviaire comprenant une unité de commande et au moins deux convertisseurs (2, 3) pour l'entraînement du véhicule ferroviaire, dans lequel un premier convertisseur (2) est prévu pour l'alimentation en énergie d'au moins deux moteurs de traction pour l'entraînement d'au moins deux essieux longitudinaux d'un premier côté du véhicule, et dans lequel une autre deuxième convertisseur (3) est prévu pour l'alimentation en énergie d'au moins deux moteurs de traction pour l'entraînement d'au moins deux essieux longitudinaux d'un deuxième côté du véhicule, et le véhicule ferroviaire comprend des moyens de détection d'une différence de vitesse de rotation d'au moins deux roues opposées du véhicule ferroviaire, par lesquelles une différence de vitesse de rotation entre au moins une première roue du premier côté du véhicule et au moins une deuxième roue, opposée à la première roue, du deuxième côté du véhicule, sont détectées pendant un laps de temps donné à l'avance,
dans lequel
au moyen de l'unité de commande, les au moins deux essieux longitudinaux du premier côté du véhicule et les au moins deux essieux longitudinaux du deuxième côté du véhicule sont entraînées en fonction de la courbe en fonction du temps de la différence de vitesse de rotation, dans lequel, en fonction des positions respectives des au moins deux essieux longitudinaux de chaque côté du véhicule dans une courbe et/ou par rapport à une courbe, l'entraînement des au moins deux essieux longitudinaux d'un côté de véhicule s'effectue à une puissance différente par rapport à l'autre côté du véhicule, et dans lequel l'entraînement à une puissance différente ne s'effectue que si la différence de vitesse de rotation, détectée entre au moins la première roue du premier côté du véhicule et au moins la deuxième roue du deuxième côté du véhicule, est plus grande que la différence entre le diamètre nominal du cercle de roulement et le diamètre de l'arrondi du boudin des roues du véhicule ferroviaire.

2. Véhicule ferroviaire suivant la revendication 1,
dans lequel des roues opposées, entraînées au moyen de convertisseurs (2, 3) différents, des essieux longitudinaux de côtés différents du véhicule sont entre elles exempts d'accouplements transversaux.

3. Véhicule ferroviaire suivant l'une des revendications 1 ou 2,
dans lequel
il comprend des moyens de détection d'un trajet en courbe du véhicule ferroviaire
et il comprend une unité de commande, pour la commande du premier et du deuxième convertisseur pour l'alimentation en énergie différente l'une de l'autre des moteurs de traction des deux côtés du véhicule.

4. Véhicule ferroviaire suivant l'une des revendications 1 à 3,
dans lequel
le premier convertisseur (2) est prévu pour l'alimentation en énergie d'au moins trois moteurs de traction pour l'entraînement d'au moins trois essieux longitudinaux du premier côté du véhicule et l'autre deuxième convertisseur (3) est prévu pour l'alimentation en énergie d'au moins trois moteurs de traction pour l'entraînement d'au moins trois essieux longitudinaux du deuxième côté du véhicule.

5. Procédé pour faire fonctionner un véhicule ferroviaire suivant l'une des revendications 1 à 4, dans lequel on alimente en énergie, au moyen d'un premier convertisseur, au moins deux moteurs de traction pour l'entraînement d'au moins trois essieux longitudinaux d'un premier côté du véhicule, et dans lequel on alimente en énergie, au moyen d'un autre deuxième convertisseur, au moins deux moteurs de traction pour l'entraînement d'au moins deux essieux longitudinaux d'un deuxième côté du véhicule, et on détecte, pendant un laps de temps donné à l'avance, une différence de vitesse de rotation entre au moins une première roue du premier côté du véhicule et au moins une deuxième roue, opposée à la première roue, du deuxième côté du véhicule,
dans lequel
en fonction de la courbe en fonction du temps de la différence de vitesse de rotation, on entraîne les au moins deux essieux longitudinaux du premier côté du véhicule et au moins les deux essieux longitudinaux du deuxième côté du véhicule, dans lequel, en fonction des positions respectives des au moins deux essieux longitudinaux de chaque côté du véhicule, on entraîne, dans une courbe et/ou par rapport à une courbe, les au moins deux essieux longitudinaux d'un côté du véhicule à une puissance différente par rapport à l'autre côté du véhicule, dans lequel l'entraînement à une puissance différente n'a lieu que si la différence de vitesse de rotation, détectée entre au moins la première roue du premier côté du véhicule et au moins la deuxième roue du deuxième côté du véhicule, est plus grande que la différence entre le diamètre nominal du cercle de roulement et le diamètre de l'arrondi du boudin des roues du véhicule ferroviaire.

6. Procédé suivant la revendication 5,
dans lequel
on entraîne les au moins deux essieux longitudinaux du premier côté du véhicule ferroviaire à une puissance plus petite que les au moins deux essieux longitudinaux du deuxième côté du véhicule.

7. Procédé suivant la revendication 5,
dans lequel
on n'entraîne pas pendant un trajet en courbe les au moins deux essieux longitudinaux du côté du véhicule à l'intérieur de la courbe.
